# EUROPEAN PATENT SPECIFICATION

(11) **EP 3 266 648 B1**
(45) Date of publication and mention of the grant of the patent: **11.09.2019**
(21) Application number: 16177858.4
(22) Date of filing: 04.07.2016
(51) Int. Cl.: B60N 2/30

(54) **SEAT HAVING FOLDABLE STRUCTURE FOR VEHICLES**
SITZ MIT FALTBARER STRUKTUR FÜR FAHRZEUGE
SIÈGE À STRUCTURE PLIABLE POUR VÉHICULES

(43) Date of publication of application: 10.01.2018
(73) Proprietor: BRUSA Koltuk ve Ic Trim Teknolojileri Sanayi ve Tiaret A.S., 16159 Nilüfer/Bursa (TR)
(72) Inventor: Tuna, Berke, Mudanya, Bursa (TR)
(74) Representative: Habermann, Hruschka & Schnabel

(56) References cited:
- EP-A1- 0 636 511
- EP-A2- 1 780 072
- US-A- 2 043 287

## Description

The present invention relates to a seat having a folding structure to be employed in connection with transportation vehicles. Furthermore, the invention relates to a transportation vehicle comprising such seats.

Transportation vehicles, such as bus, minibus, train, ferryboat, plane etc., have the need for auxiliary seats, which can be used by passengers or personnel when needed. Such seats can be stored in an upright position when not in use so as to save space within the vehicle, e.g. the aisles of a plane.

Nowadays the carrying capacity of public transportation vehicles is an important feature, as it directly influences the profit margin. In order to lower expenses and to run such vehicles more efficiently, the structure and design of auxiliary seats, which e.g. are aimed for the crew or can be used as additional seats in case of high passenger volume, should not block the aisles, corridors, entrances, emergency exits etc., should not reduce the overall passenger capacity of the vehicle and should not compromise the passenger and/or vehicle security. For that reason, usually auxiliary seats having a foldable structure are used in connection with such vehicles.

Auxiliary passenger seats comprising some kind of folding mechanism are quite limited in comfort. Either they allow only one particular seating position of the seating surface when folded out, or they provide some, however limited adjustable angular movement of the seating surface. In the latter case, though providing a bit more comfortable seating during transportation, too much storing space is required when not in use.

TR 2010/00589 refers to a foldable seat for transportation vehicles, which includes a seating surface and a backrest surface that can be installed to a vehicle chassis mount wall. In order to save space while seats are not in use, an extra space has to be provided in the vehicle chassis to store the seat in it. This requires a specific chassis design in the first place, with impacts to the design freedom, while different kind of vehicles need different chassis designs, and proves to be costly later on, because renovation works on the vehicle or the chassis may require cumbersome, special operations.

In some structures, only the seating part moves, as disclosed e.g. by TR 2008/05780. The seating surface can be pulled forward in order to have more seating space, while in other situations the seating surface can be pushed backward so as to have less seating space, depending on the passengers needs. The possibility to save space inside the vehicle for such seat structures is, however, limited.

From WO 1994/11247 a seat with a foldable structure is known having both a seating surface and a back rest. In principle, such seat provides some storing capability, however, its application is cumbersome and the mechanics used for it include quite complicated systems, which increases the costs both with respect to production and maintenance.

For example, from EP 1 780 072 A2 a seat having a foldable structure for vehicles according to the preamble of claim 1 is known.

Based on the above, it is an object of the present invention to provide a seat, in particular auxiliary seat, for vehicles, such as transportation vehicles, which overcomes the above-mentioned disadvantages with respect to space constraints and which offers an easy handling and assembly. In particular, it is an objective to provide a seat having a foldable structure, for which the seat position is adjustable.

Such objective is solved by a seat having a foldable structure according to claim 1.

According to the invention a seat having a foldable structure for vehicles is suggested, which comprises a frame and a seating surface being pivotably arranged with respect to the frame by means of a hinge, the hinge comprising a joint and said joint comprises a means for adjusting the angular pivoting range of the hinge.

According to the invention, said means traverses the joint tangentially to the hinge axis and is configured to be activated from the outside. Actuation can be performed by means of a tool or by hand, if the means comprise a grip-like end or similar.

The joint according to the invention is formed by a first bearing sleeve and a second bearing sleeve, in which the second bearing sleeve is rotatably supported relative to the first bearing sleeve. The rotatable support covers a corresponding turning range, which shall be adjustable by said means.

The first and the second bearing sleeve may be aligned on a common axis, while the first bearing sleeve is fixed with respect to the frame and the second bearing sleeve is fixed with respect to a pivot shaft supporting the seating surface, which pivot shaft forms the main body of the hinge.

The common axis is formed by a common support shaft, which traverses the first bearing sleeve and the second bearing sleeve, in which the common support shaft will be fixed to the frame and preferably inserted through a corresponding bore in a frame section from the outside.

In a particular embodiment of the seat according to the invention the first bearing sleeve comprises a first axially graded section, which for it defines a first angular range, and the second bearing sleeve comprises a second axially graded section, which for it defines a second angular range. Axially in this respect shall mean that the graded sections extend in the axial direction of the sleeves, i.e. along the joint axis.

The second axially graded section is angularly offset to the first axially graded section such that the resulting angular offset defines the overall angular pivoting range of the seating surface, i.e. the hinge. In other words, the difference or free angular distance, when seen circumferentially, between the first axially graded section of the first bearing sleeve and the second axially graded section of the second bearing sleeve restricts the available angular movement of the hinge and thus seating surface of the seat.

The first bearing sleeve and the second bearing sleeve are configured and arranged in relation to each other within the frame such that the seating surface can be folded between the rest position and the seating position, adequately.

According to the invention, the position, in particular the inclination of the seating surface in relation to the frame and thus to a mount wall of the chassis of the vehicle, shall be adjustable to provide a corresponding comfort depending on the needs of the passenger.

This is realized in that the angular offset shall be adjustable by said means.

According to one particular embodiment said means traverse said second axially graded section of the second bearing sleeve, which comprises a threaded through-hole and said means is configured as a threaded bolt being received in said through-hole. The threaded bolt can advance in both directions and extends into the free angular distance as defined between the first axially graded section and the second axially graded section. By simply turning the threaded bolt, the range, how far the end of the threaded bolt extends into said free angular distance, and at the same time the distance itself can be reduced or enlarged, thereby influencing the angular movability of the hinge and thus seating surface. In other words, by turning the bolt and thereby setting the extension of its free end into the open angular distance between the two bearing sleeves, the angular pivoting range can be adjusted in a very simple way.

In order to provide a more simple design of the hinge mechanism in this context, the pivot shaft is supported between two parallel sections of the frame, which preferably has a U-shape, and the support shaft is inserted from the outside of said sections traversing a corresponding bore in it.

The adjustable joint may be realized to both ends of the pivot shaft between the lateral sections of the U-shaped frame, however, one adjustable joint according to the invention at only one side could be enough to provide the desired adjustability function for the seat. The joint at the opposite lateral end may be formed identical with the two bearing sleeves, but without the adjustable means like the threaded bolt.

While the first bearing sleeve is arranged from the inside of said sections, the second bearing sleeve may preferably be integral with the pivot shaft. The support shaft traversing the lateral section of the frame thereby rotatably fixedly supports the first bearing sleeve with respect to the frame on the one hand, e.g. by providing a press- or form-fit, and rotatably supports the second bearing sleeve and the pivot shaft in relation to the first bearing sleeve on the other. The support shaft forms the rotational axis of the joint.

According to the invention the frame is configured to be directly mountable at a wall section of the chassis of a vehicle such that the seating surface is pivotable against said wall section. The wall section thereby directly forms the back rest for such an auxiliary seat.

In order to bring the seating surface autonomously into its rest position, i.e. folded against the wall chassis section, when no passenger is sitting on the seat, an actuator is arranged between the frame and the seating surface, e.g. a hydraulic piston or similar. The provision of a constant closing or resetting force also serves to keep the seating surface, when in the rest position, dampened against noise generation due to rattling and vibrations, when the vehicle moves not smoothly.

The invention furthermore refers to a vehicle which comprises at least one seat according to the above-described embodiments and configurations.

The configuration of the hinge according to the invention on the one hand and the simple construction of the seating surface to be supported in a simple U-shaped frame by means of such hinge on the other allows the construction of a very thin foldable vehicle seat, which can be attached to a wall section of the vehicle chassis without the need to provide a back rest. Thereby, such auxiliary seat, independent from its use in connection with a vehicle of whatever kind, generally needs less space for storage in the rest position. Aisles, corridors or similar within the vehicle will not be blocked, so that space for passengers will not be limited.

A major advantage of the seat according to the invention can be seen in that the seat and in particular its hinge mechanism for closing or opening the seat is relatively simple built, in that a minimum amount of components are used, which reduces substantially the costs for production, assembly and maintenance. Furthermore, such seat, when mounted in the vehicle, can be easily handled.

Further advantages and features do become apparent from the description of the embodiments as explained in connection with the accompanying drawings, in which
Fig. 1a shows a front view of the seat according to the invention in the rest position;
Fig. 1b shows a side view of the seat in the rest position;
Fig. 2a show a perspective view of the seat according to the invention in the use position;
Fig. 2b shows a side view of the seat in the use position;
Fig. 3a shows a hinge structure according to the invention;
Fig. 3b shows the hinge structure in a perspective view;
Fig. 4 is a cross-section through one lateral end of the hinge structure;
Fig. 5 shows an explosive view of the main components of the hinge according to the invention;
Fig. 6a shows partially a front perspective view of a joint according to the invention;
Fig. 6b shows partially a rear perspective view of the joint; and
Fig. 7 shows a radial cross-section through the joint.

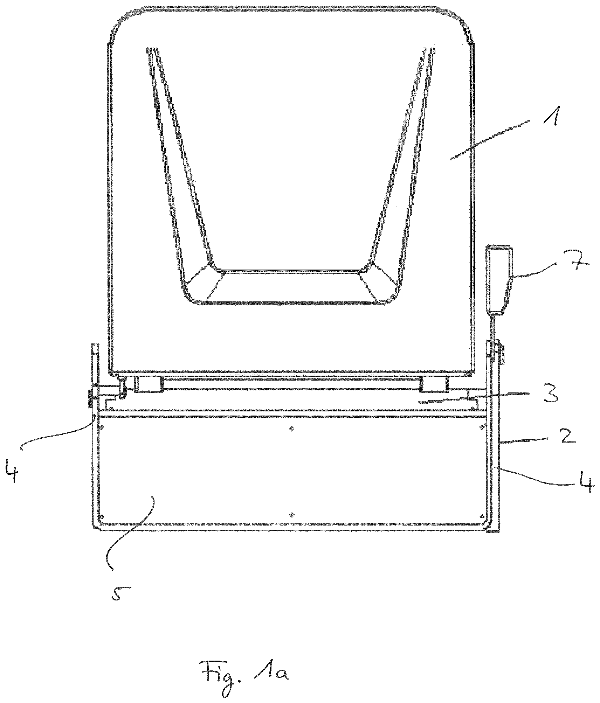

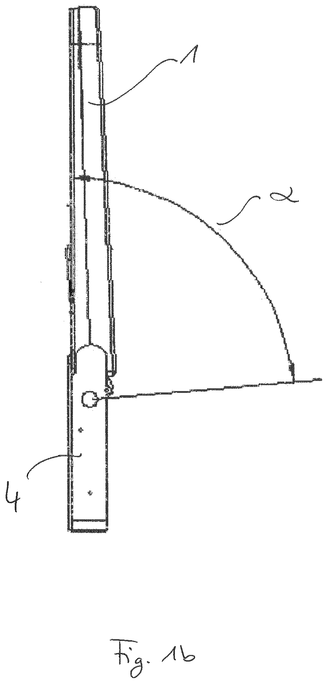

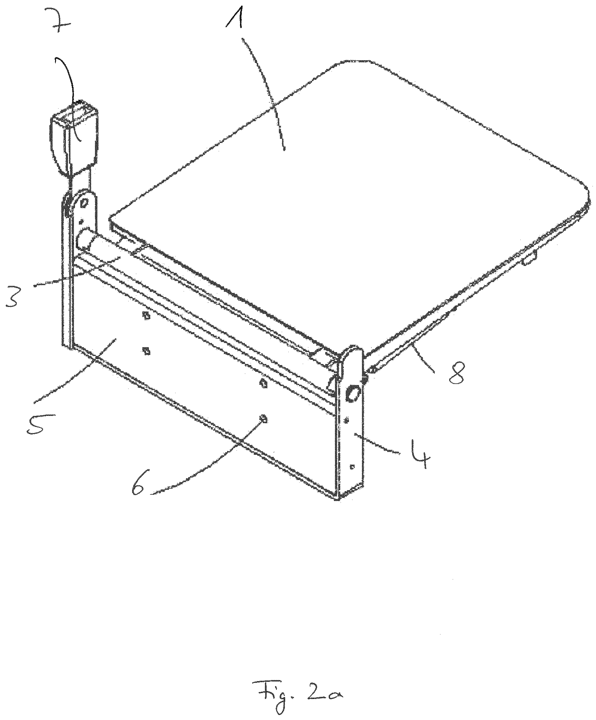

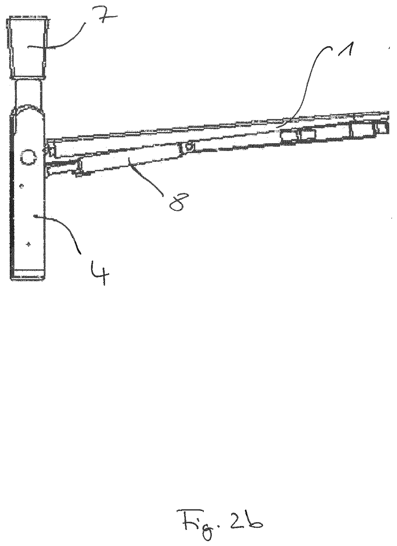

Figures 1a and 1b show a seat according to the invention in the rest position, i.e. when not in use, while Figures 2a and 2b show the seat according to the invention in the use position, i.e. when a passenger can sit on it.

Basically, the seat according to the invention comprises a seating surface 1, which is pivotably supported in a structure or frame 2 by means of a rod-like hinge 3. The seating surface 1 is directly attached to the hinge 3.

The frame 2 is U-shaped and consists of two lateral sections 4 and a plate section 5 between it. The plate 5 comprises holes 6, with which the entire structure can be bolted to a wall section of a vehicle chassis (not shown).

As can be particularly seen in Fig. 2a, the lateral sections 4 of the frame 2 carry the hinge 3.

At one end of one lateral section 4, a buckle 7 for a seat belt is provided. At the opposite lateral section 4, a piston 8 acting between the seating surface 1 and the frame 2 is provided, which offers a constant force to automatically bring the seating surface 1 back into the rest position, when no passenger sits on it.

In Fig. 1b, the overall pivoting range α of the seating surface 1 is indicated, which according to the invention shall be adjustable, as will be explained in the following.

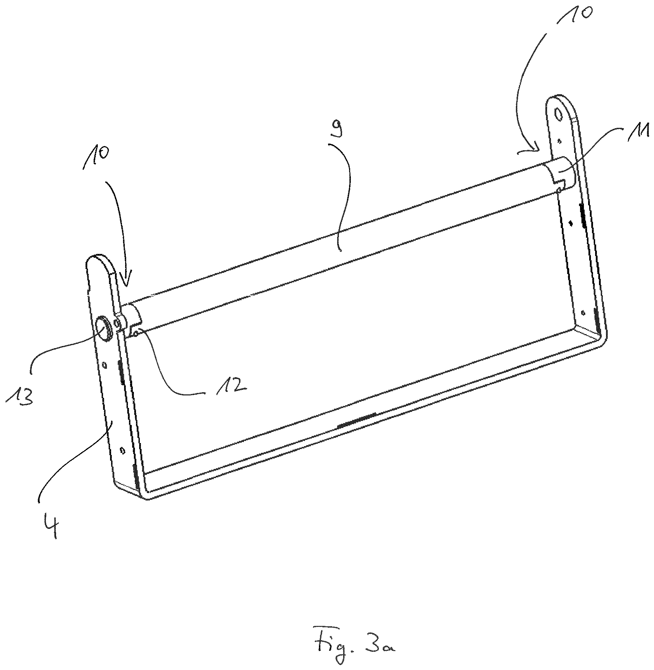

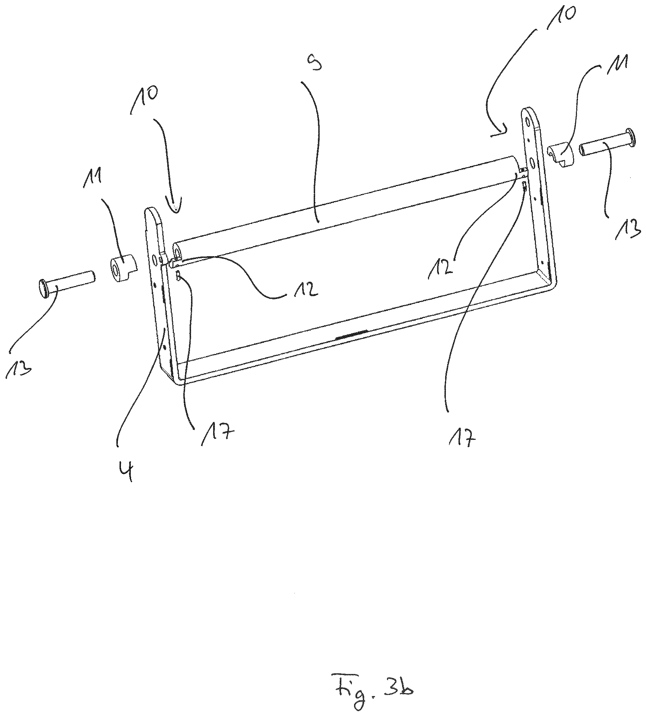

In Figures 3a and 3b exemplarily the hinge structure according the invention is shown.

The rod-like hinge 3 comprises a pivot shaft 9, which extends between the two lateral sections 4 of the frame 2.

At both ends of the pivot shaft 9, a joint 10 is provided, which consists of a first bearing sleeve 11 and a second bearing sleeve 12, which is integral with the pivot shaft 9.

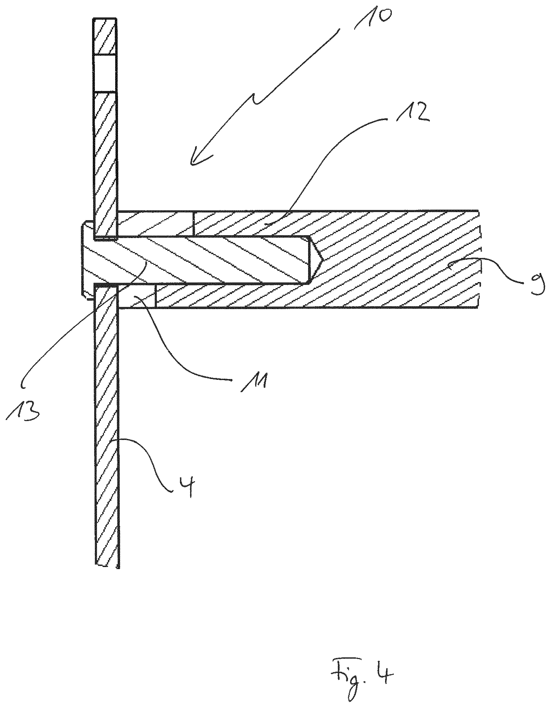

As can be seen from the longitudinal cross-section of Fig. 4, the first bearing sleeve 11 and the second bearing sleeve 12 are traversed by a support shaft 13, which is inserted from the outside of the lateral section 4, through the first bearing sleeve 11 and into a corresponding bore of the second bearing sleeve 12.

For enabling the hinge mechanism to rotate, the second bearing sleeve 12 needs to be rotatably supported in relation to the first bearing sleeve 11 and the support shaft 13. The first bearing sleeve 11 may either be rotationally fixed with respect to the lateral section 4 of the frame 2 directly or by a corresponding press-fit on the support shaft 13 itself, while the second bearing sleeve 12 of the pivot shaft 9 is rotatably supported on the support shaft 13 by providing a corresponding tolerance between the support shaft 13 and the bore of the second bearing sleeve 12.

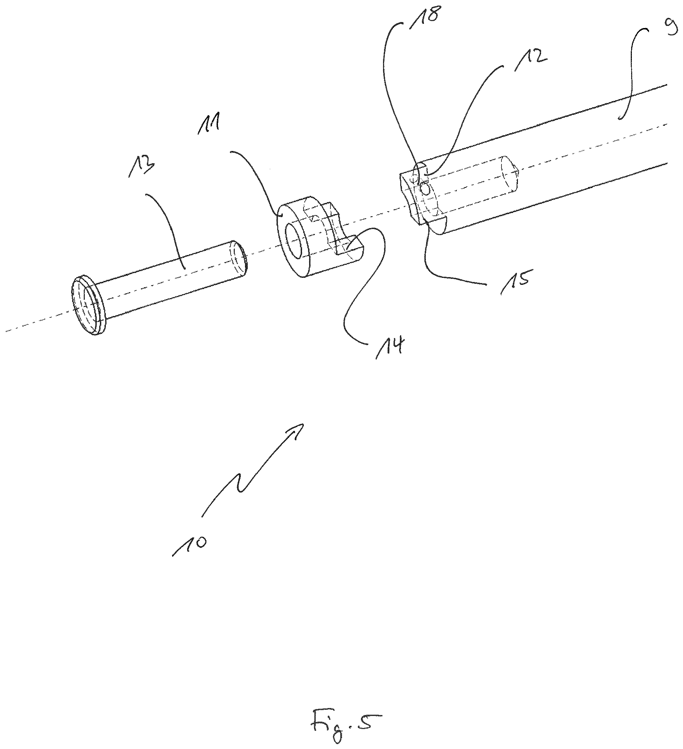

Fig. 5 shows a perspective explosive view of the joint 10 according to the invention.

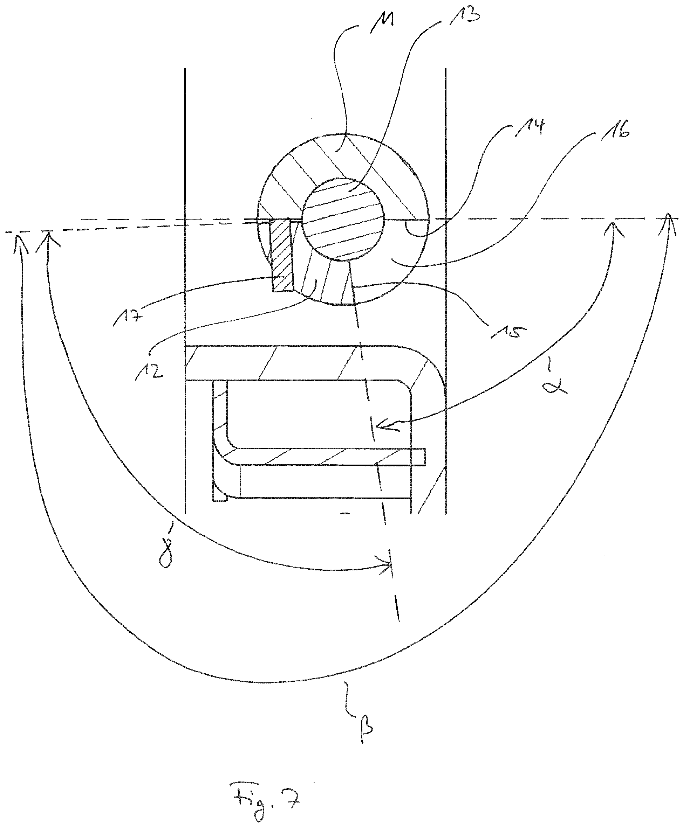

The first bearing sleeve 11 comprises integrally a first graded section 14, which extends in axial direction. The first graded section 14 defines a first angular range β of 180°, as can best be seen in the cross-section of Fig. 7. The second bearing sleeve 12 comprises integrally a second graded section 15, which defines a second angular range of e.g. almost γ = 90° and which also extends axially but towards the first bearing sleeve 11 in such a way that the second graded section 15 engages with the first graded section 14, in which the second angular range γ is offset to the first angular range β.

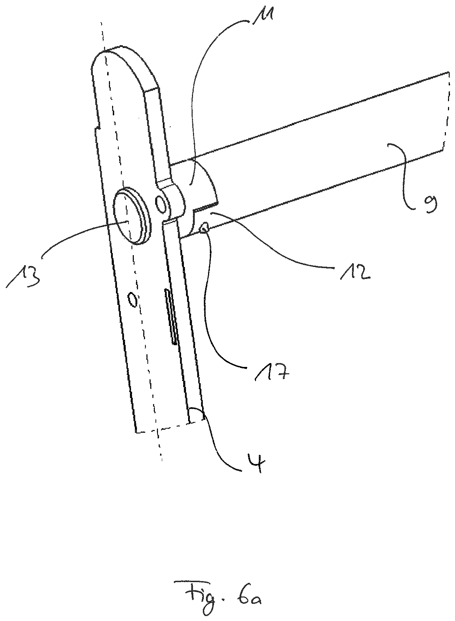

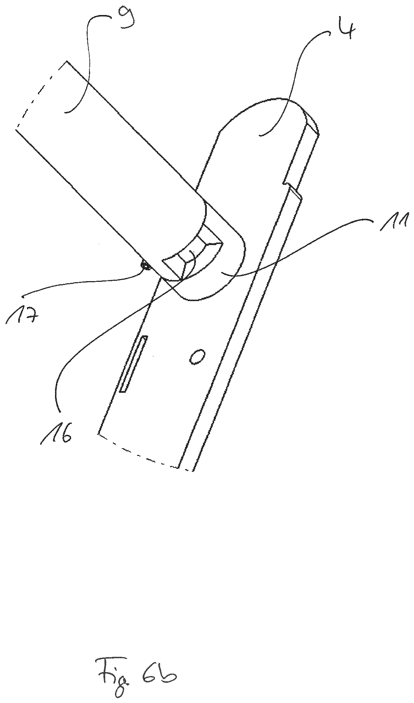

As can best be seen in Fig. 6b, the angular offset defines an angular free space 16 or angular distance between the first bearing sleeve 11 and the second bearing sleeve 12, which basically defines the overall angular pivoting range α for the seating surface 1 in relation to the frame 2.

According to the invention, such angular distance 16 is adjustable by a corresponding means, which can limit the angular distance 16, so that the angular pivoting range α can be reduced, accordingly.

The means is formed by a threaded bolt 17, which is inserted into a threaded through-hole 18 being provided in the second bearing sleeve 12 at a corresponding position, see e.g. Fig. 5. Depending on the extent, how far the threaded bolt 17 extends from the second graded section 15, the angular distance 16 and thus the free rotating angle α available to the pivot shaft 9 for rotating in relation to the first bearing sleeve 11 will be reduced.

The threaded-bolt 17 can be easily accessed from the outside and turned to adjust the rotating angle α.

## Claims

1. Seat having a foldable structure for vehicles comprising a frame (2) and a seating surface (1) being pivotably arranged with respect to the frame (2) by means of a hinge (3), the hinge (3) comprising a joint (10), which comprises a means (17,18) for adjusting the angular pivoting range (a) of the hinge, which means (17,18) traverses the joint (10) tangentially to the hinge axis and is configured to be activated from the outside, wherein the joint (10) is formed by a first bearing sleeve (11) and a second bearing sleeve (12) and in which the second bearing sleeve (12) is rotatably supported relative to the first bearing sleeve (11), the turning range (a) of which is adjustable by said means (17,18), and wherein the first bearing sleeve (11) is fixed with respect to the frame (2) and the second bearing sleeve (12) is fixed with respect to a pivot shaft (9) supporting the seating surface (1),
**characterized in that**
the first bearing sleeve (11) and the second bearing sleeve (12) are traversed by a common support shaft (13) being fixed to the frame (2).

2. Seat of claim 1, in which the first bearing sleeve (11) comprises a first axially graded section (14) defining a first angular range (β) and the second bearing sleeve (12) comprises a second axially graded section (15) defining a second angular range (γ), in which the second axially graded section (15) is angularly offset to the first axially graded section (14), the angular offset defining the overall angular pivoting range (a) of the seating surface (1).

3. Seat of claim 2, in which the angular offset is adjustable by said means (17,18).

4. Seat of claim 3, in which said means (17,18) traverse said second axially graded section (15) of the second bearing sleeve (12).

5. Seat of claim 4, in which the second axially graded section (15) comprises a threaded through-hole (18) and said means (17) is configured as a threaded bolt (17) being received in said through-hole (18).

6. Seat of one of claims 1 to 5, in which the pivot shaft (9) is supported between two parallel sections (4) of the frame (2) and the support shaft (13) is inserted from the outside of said sections (4).

7. Seat of claim 6, in which the first bearing sleeve (11) is arranged from the inside of said sections (4).

8. Seat of claim 6 or 7, in which the second bearing sleeve (12) is integral with the pivot shaft (9).

9. Seat of one of claims 1 to 8, in which the frame (2) is configured to be mountable at a wall section of the vehicle such that the seating surface (1) is pivotable against said wall section.

10. Seat of claims 1 to 9, in which an actuator (8) is arranged between the frame (2) and the seating surface (1) to autonomously bring the seating surface (1) into a rest position when the seat is not in use.

11. Vehicle comprising at least one seat according to one of claims 1 to 10.

## Patentansprüche

1. Sitz mit einer faltbaren Struktur für Fahrzeuge, die einen Rahmen (2) und eine Sitzfläche (1) aufweisen, die in Bezug auf den Rahmen (2) mittels eines Scharniers (3) schwenkbar angeordnet ist, wobei das Scharnier (3) ein Gelenk (10) aufweist, das ein Mittel (17,18) zum Einstellen des Winkelschwenkbereichs (α) des Scharniers aufweist, das das Gelenk (10) tangential zur Scharnierachse durchquert und ausgestaltet ist, um von außen betätigbar zu sein, wobei das Gelenk (10) durch eine erste Lagerhülse (11) und eine zweite Lagerhülse (12) gebildet ist und wobei die zweite Lagerhülse (12) in Bezug auf die erste Lagerhülse (11) drehbar gelagert ist, deren Drehbereich (α) durch die Mittel (17,18) einstellbar ist, und wobei die erste Lagerhülse (11) in Bezug auf den Rahmen (2) und die zweite Lagerhülse (12) in Bezug auf eine die Sitzfläche (1) tragende Gelenkwelle (9) befestigt ist,
**dadurch gekennzeichnet, dass**
die erste Lagerhülse (11) und die zweite Lagerhülse (12) von einer gemeinsamen Stützwelle (13) durchquert werden, die am Rahmen (2) befestigt ist.

2. Sitz nach Anspruch 1, bei dem die erste Lagerhülse (11) einen ersten axial abgestuften Abschnitt (14) aufweist, der einen ersten Winkelbereich (β) definiert, und die zweite Lagerhülse (12) einen zweiten axial abgestuften Abschnitt (15) aufweist, der einen zweiten Winkelbereich (γ) definiert, bei dem der zweite axial abgestufte Abschnitt (15) winklig zum ersten axial abgestuften Abschnitt (14) versetzt ist, wobei der Winkelversatz den gesamten winkelmäßigen Schwenkbereich (α) der Sitzfläche (1) definiert.

3. Sitz nach Anspruch 2, bei dem der Winkelversatz durch das Mittel (17,18) einstellbar ist.

4. Sitz nach Anspruch 3, bei dem die Mittel (17,18) den zweiten axial abgestuften Abschnitt (15) der zweiten Lagerhülse (12) durchqueren.

5. Sitz nach Anspruch 4, in dem der zweite axial abgestufte Abschnitt (15) ein Gewinde-Durchgangsloch (18) aufweist und das Mittel (17) als Gewindebolzen (17) ausgebildet ist, der in dem Durchgangsloch (18) aufgenommen wird.

6. Sitz nach einem der Ansprüche 1 bis 5, bei dem die Gelenkwelle (9) zwischen zwei parallelen Abschnitten (4) des Rahmens (2) abgestützt ist, und die Stützwelle (13) von der Außenseite der Abschnitte (4) eingesetzt ist.

7. Sitz nach Anspruch 6, bei dem die erste Lagerhülse (11) von der Innenseite der Abschnitte (4) angeordnet ist.

8. Sitz nach Anspruch 6 oder 7, bei dem die zweite Lagerhülse (12) mit der Gelenkwelle (9) fest verbunden ist.

9. Sitz nach einem der Ansprüche 1 bis 8, bei dem der Rahmen (2) konfiguriert ist, um an einem Wandabschnitt des Fahrzeugs montierbar zu sein, so dass die Sitzfläche (1) gegen den Wandabschnitt schwenkbar ist.

10. Sitz nach den Ansprüchen 1 bis 9, bei dem ein Stellglied (8) zwischen dem Rahmen (2) und der Sitzfläche (1) angeordnet ist, um die Sitzfläche (1) bei Nichtgebrauch des Sitzes selbstständig in eine Ruheposition zu bringen.

11. Fahrzeug mit mindestens einem Sitz nach einem der Ansprüche 1 bis 10.

## Revendications

1. Siège ayant une structure pliable pour véhicules comprenant un cadre (2) et une surface d'assise (1) agencée de manière pivotante par rapport au cadre (2) au moyen d'une charnière (3), la charnière (3) comportant un joint (10), qui comprend un moyen (17,18) pour régler la plage de pivotement angulaire (a) de la charnière, lequel moyen (17,18) traverse le joint (10) de manière tangente à l'axe de charnière et est configuré pour être activé à partir du à l'extérieur,
dans lequel le joint (10) est formé par un premier manchon de palier (11) et un second manchon de palier (12) et dans lequel le second manchon de palier (12) est supporté de manière rotative par rapport au premier manchon de palier (11), dont la plage de rotation (a) est réglable par ledit moyen (17, 18), et dans lequel le premier manchon de palier (11) est fixe par rapport au cadre (2) et le second manchon de palier (12) est fixe par rapport à un arbre de pivotement (9) supportant la surface d'assise (1),
**caractérisé en ce que**
le premier manchon de palier (11) et le second manchon de palier (12) sont traversés par un arbre de support commun (13) fixé au cadre (2).

2. Siège selon la revendication 1, dans lequel le premier manchon de palier (11) comprend une première section à gradation axiale (14) définissant une première plage angulaire ((3) et le second manchon de palier (12) comprend une seconde section à gradation axiale (15) définissant une seconde plage angulaire (γ), dans lequel la seconde section à gradation axiale (15) est décalée angulairement par rapport à la première section à gradation axiale (14), le décalage angulaire définissant la plage de pivotement angulaire global (a) de la surface d'assise (1).

3. Siège selon la revendication 2, dans lequel le décalage angulaire est réglable par ledit moyen (17, 18).

4. Siège selon la revendication 3, dans lequel ledit moyen (17, 18) traverse ladite seconde section à gradation axiale (15) du second manchon de palier (12).

5. Siège selon la revendication 4, dans lequel la seconde section (15) à gradation axiale comprend un trou traversant fileté (18) et ledit moyen (17) est configuré sous la forme d'un boulon fileté (17) reçu dans ledit trou traversant (18).

6. Siège selon l'une des revendications 1 à 5, dans lequel l'arbre de pivotement (9) est supporté entre deux sections parallèles (4) du cadre (2) et l'arbre de support (13) est inséré depuis l'extérieur desdites sections (4).

7. Siège selon la revendication 6, dans lequel le premier manchon de palier (11) est agencé depuis l'intérieur desdites sections (4).

8. Siège selon la revendication 6 ou 7, dans lequel le second manchon de palier (12) est d'un seul tenant avec l'arbre de pivotement (9).

9. Siège selon l'une des revendications 1 à 8, dans lequel le cadre (2) est configuré pour pouvoir être monté sur une section de paroi du véhicule de sorte que la surface d'assise (1) puisse pivoter contre ladite section de paroi.

10. Siège selon les revendications 1 à 9, dans lequel un actionneur (8) est disposé entre le cadre (2) et la surface d'assise (1) pour amener de manière autonome la surface d'assise (1) dans une position de repos lorsque le siège n'est pas utilisé.

11. Véhicule comprenant au moins un siège selon l'une des revendications 1 à 10.
